# EUROPEAN PATENT APPLICATION

(11) **EP 4 685 992 A1**
(43) Date of publication of application: **28.01.2026**
(21) Application number: 24849491.6
(22) Date of filing: 25.07.2024
(51) Int. Cl.: H01M 50/59, H01M 50/586, H01M 50/531

(54) **ELECTRODE ASSEMBLY PROTECTION COUPLER AND SECONDARY BATTERY INCLUDING SAME**

(30) Priority: 03.08.2023 KR 20230101846
(71) Applicant: LG Energy Solution, Ltd., Seoul 07335 (KR)
(72) Inventor: LEE, Jae Ho, Daejeon 34122 (KR); KIM, Sang Hun, Daejeon 34122 (KR); CHOI, Ji Eun, Daejeon 34122 (KR); LEE, Ji Sun, Daejeon 34122 (KR)
(74) Representative: Goddar, Heinz J.
(86) International application number: PCT/KR2024/010870
(87) International publication number: WO 2025/028922

(57) **Abstract**

The present disclosure relates to an electrode assembly protection combination structure, and there is provided the electrode assembly protection combination structure including an electrode assembly including a pair of electrode tabs; and a guard structure coupled to the electrode assembly, and configured to protect the electrode assembly from an impact, wherein the guard structure includes a pair of fixing portions configured to fix the pair of electrode tabs, respectively; and a support portion configured to support the pair of fixing portions.

## Description

### TECHNICAL FIELD

### CROSS-REFERENCE TO RELATED APPLICATIONS

The present application claims priority to Korean Patent Application No. 10-2023-0101846 filed on August 3, 2023 in the Republic of Korea, the disclosure of which is incorporated herein by reference.

### TECHNICAL FIELD

The present disclosure relates to an electrode assembly protection combination structure and a secondary battery including the same, and more particularly, to an electrode assembly protection combination structure including an electrode assembly combined with a guard structure to protect the electrode assembly from impacts and a secondary battery including the same.

### BACKGROUND ART

Secondary batteries can be widely applied to different types of products and possess electrical properties having high energy density. Secondary batteries are applied to not only mobile electronic devices but also electric vehicles or hybrid electric vehicles and power storage systems that are powered by a source of electric power. Secondary batteries remarkably reduce the use of fossil fuels, and in addition to the primary advantage, they do not generate by-products from the use of energy. From this perspective, secondary batteries are attracting attention as a new source of energy that is more environmentally friendly and energy-efficient.

An electrode assembly included in a secondary battery includes a separator and an electrode, and according to the manufacturing process, the electrode assembly may be classified into a jellyroll-type electrode assembly in which a sheet-type positive electrode and a sheet-type negative electrode coated with an electrode active material are wound with a separator interposed between them, a stack-type electrode assembly in which a plurality of positive electrodes and a plurality of negative electrodes are stacked in a sequential order with a separator interposed between them, and a stack/folding-type electrode assembly in which stack-type unit cells are wound with a long separation film.

However, because a current collector included in the electrode assembly is formed from a very thin metal foil and is vulnerable to deformation by external forces, damage such as cracks or tears may occur to the surface when impacts are applied to the electrode assembly. In particular, when an impact is applied in the length direction to the electrode assembly having an electrode tab at two sides, the electrode tab may be pushed towards the electrode assembly and the impact may be applied to the current collector. When the current collector is subjected to the impact, breakage occurs in an area where the electrode tab and the current collector meet, and the current collector is easily damaged. There is a need for development of technology for solving this problem.

### SUMMARY

### TECHNICAL PROBLEM

The present disclosure is designed to solve the above-described problem, and therefore the present disclosure is directed to providing an electrode assembly protection combination structure including an electrode assembly combined with a guard structure to protect a current collector and an electrode tab from impacts applied in a length direction of the electrode assembly and a secondary battery including the same.

### TECHNICAL SOLUTION

As a first embodiment of the present disclosure, the present disclosure provides an electrode including a current collector formed from a metal foil; and a first electrode active material layer coated on a surface of the current collector, and having a compressed portion formed by compression of a predetermined area by an applied pressure, wherein the compressed portion is formed at an end portion of the first electrode active material layer, and the compressed portion has higher density than an inner area.

Additionally, the fixing portion may include a slit groove recessed from one side to allow the electrode tab to be inserted into the slit groove.

Additionally, the fixing portion may include a metal portion that is formed at one or both sides of the slit groove along a direction in which the slit groove is recessed, and comes into contact with the electrode tab.

Additionally, the fixing portion may further include an elastic portion that surrounds an outer surface of the metal portion, and brings the electrode tab into contact with the metal portion.

Additionally, the elastic portion may include an elastic transmission portion that is formed along a length direction of the slit groove and surrounds a surface and an opposite surface of the metal portion; and an elastic deformation portion that connects the elastic transmission portions, and elastically deforms as the elastic transmission portions spread apart.

Additionally, the elastic portion may include an electrically insulating material.

Additionally, the metal portion may include a joining portion at an outer side surface, the joining portion being exposed from the elastic portion, and to which an electrode lead is joined.

Additionally, the electrode lead may include a first part joined to the joining portion; and a second part protruded from the first part in an outward direction.

Additionally, the support portion may be disposed between the pair of fixing portions, and an end portion and an opposite end portion of the support portion may be coupled to the fixing portion at a position biased on a surface of the fixing portion.

Additionally, the support portion may be disposed at the other side of the fixing portion.

Additionally, the support portion may include a plurality of support portions, and the plurality of support portions may be spaced apart from each other in a diagonal direction and arranged in parallel.

Additionally, the support portion may be disposed above or below the slit groove along a direction in which the slit groove is recessed.

Additionally, the support portion may include an electrically insulating material.

Additionally, the support portion may be a linear member having a predetermined cross-sectional shape.

As a second embodiment of the present disclosure, the present disclosure provides a secondary battery including an electrode assembly protection combination structure; and a battery case accommodating the electrode assembly protection combination structure, wherein the electrode assembly protection combination structure includes an electrode assembly including a pair of electrode tabs; and a guard structure coupled to the electrode assembly, and configured to protect the electrode assembly from an impact, wherein the guard structure includes a pair of fixing portions configured to fix the pair of electrode tabs, respectively; and a support portion configured to support the pair of fixing portions.

As a third embodiment of the present disclosure, the present disclosure provides a guard structure including a fixing portion including a slit groove and a metal portion located at one or both sides of the slit groove, and including a pair of fixing portions; and a support portion disposed between the pair of fixing portions, and configured to support the pair of fixing portions.

### ADVANTAGEOUS EFFECTS

The present disclosure may protect the current collector and the electrode tab of the electrode assembly by the guard structure for supporting the electrode assembly to prevent the transfer of external impacts to the electrode assembly.

Additionally, only by pushing the electrode tab at two end portions of the electrode assembly into the slit groove of the guard structure, the electrode assembly may be coupled to the guard structure, thereby improving the ease and convenience of the assembly process.

### BRIEF DESCRIPTION OF THE DRAWINGS

FIG. 1 is an exploded perspective view of a first embodiment of the present disclosure, showing that an electrode assembly and a guard structure are coupled to each other.
FIG. 2 is a cross-sectional view of a fixing portion of the present disclosure, taken along an x axis direction; FIG. 2(a) is a cross-sectional view of the fixing portion, and FIG. 2(b) is a cross-sectional view of a guide portion formed in the fixing portion.
FIG. 3 is a cross-sectional view of an electrode assembly protection combination structure of the present disclosure, taken along a y axis direction, showing an electrode tab inserted into a metal portion and an electrode lead joined to the metal portion.
FIG. 4 is a perspective view showing a guard structure including a second embodiment of a support portion of the present disclosure.
FIG. 5 is a perspective view showing a guard structure including a third embodiment of a support portion of the present disclosure.
FIG. 6 is a perspective view of a second embodiment of the present disclosure, showing that an electrode assembly protection combination structure is received in a battery case.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

### First Embodiment

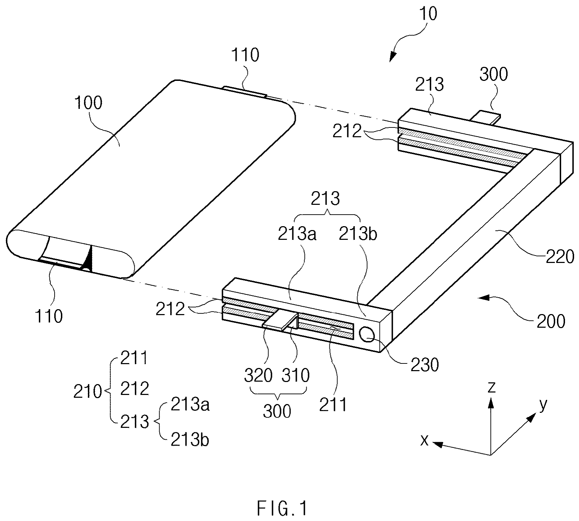

Describing with reference to FIG. 1, as a first embodiment of the present disclosure, an electrode assembly protection combination structure 10 is an electrode assembly 100 combined with a guard structure 200 to protect a current collector and an electrode tab 110 of the electrode assembly 100 from impacts, and may include the electrode assembly 100 and the guard structure 200.

The electrode assembly 100 may include a positive electrode, a negative electrode, a separator and the electrode tab 110.

The electrode assembly 100 may include, for example, a jellyroll-type electrode assembly in which a long sheet-type positive electrode and a long sheet-type negative electrode are wound with a separator interposed between them, and a stack-type electrode assembly in which a plurality of unit positive electrodes and a plurality of unit negative electrodes split into a predetermined size are stacked in a sequential order with a separator interposed between them, but is not limited thereto.

The positive electrode may be formed with a structure in which a positive electrode active material is coated on a positive current collector formed from a thin metal foil, and may include a positive coated portion or an area that is coated with the positive electrode active material and a positive uncoated portion or an area that is not coated with the positive electrode active material. A positive electrode tab may be formed by extending the positive uncoated portion in the outward direction of the electrode assembly 100. When a plurality of positive electrode tabs is extended from the positive uncoated portion in the outward direction, the positive electrode tabs may be stacked and joined together. The positive current collector may include aluminum.

The negative electrode may be formed with a structure in which a negative electrode active material is coated on a negative current collector formed from a thin metal foil, and may include a negative coated portion or an area that is coated with the negative electrode active material, and a negative uncoated portion or an area that is not coated with the negative electrode active material. A negative electrode tab may be formed by extending the negative uncoated portion in the outward direction. When a plurality of negative electrode tabs is extended from the negative uncoated portion in the outward direction, the negative electrode tabs may be stacked and joined together. The negative current collector may include copper.

The electrode tab 110 may include the positive electrode tab and the negative electrode tab, and the electrode assembly 100 may have the electrode tab 110 protruding from each of two end portion of the electrode assembly 100 in the length direction (y).

The guard structure 200 may be coupled to the electrode assembly 100, and include a pair of fixing portions 210 and a support portion 220, 240, 250.

The fixing portion 210 may fix the electrode tab 110 of the electrode assembly 100.

The pair of fixing portions 210 may be arranged spaced a predetermined distance apart from each other to fix each of the electrode tabs 110 formed at the two ends of the electrode assembly 100. Each fixing portion 210 may be disposed at one end portion and the other end portion of the electrode assembly 100, and may fix the electrode tab 110 formed at one end portion of the electrode assembly 100 and the electrode tab 110 formed at the other end portion of the electrode assembly 100.

The fixing portion 210 may include a slit groove 211, a metal portion 212 and an elastic portion 213.

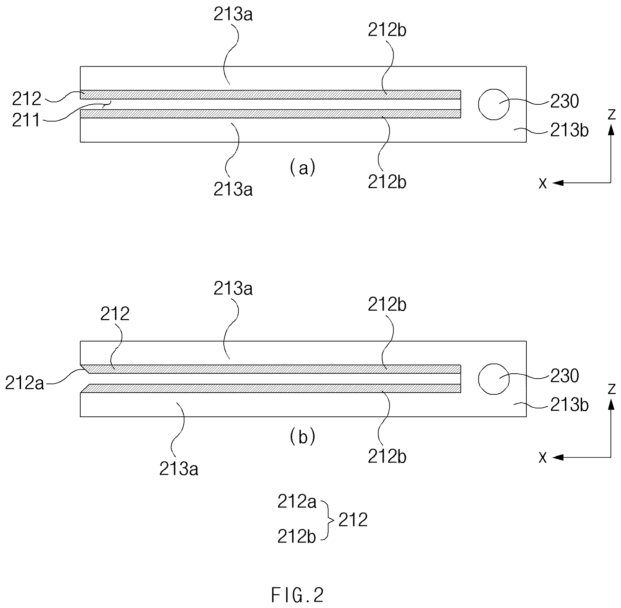

Describing with reference to FIGS. 2(a) and 2(b), the fixing portion 210 may include the slit groove 211 recessed from one side of the fixing portion 210. The electrode tab 110 may be inserted into the slit groove 211, and the width of the slit groove 211 may be equal to or smaller than the thickness of the electrode tab 110 to continuously bring the metal portion 212 disposed at one or two sides of the slit groove 211 and the electrode tab 110 inserted into the slit groove 211 into contact with each other. Here, one side of the fixing portion 210 may refer to an area of the fixing portion 210 where the slit groove 211 starts to be recessed and its surrounding area.

The slit groove 211 may guide the electrode tab 110 inserted into the slit groove 211 to move along a direction in which the slit groove 211 is recessed.

The slit grooves 211 formed at the pair of fixing portions 210 are all recessed in the same direction from one side of the fixing portion 210, thereby improving the ease in coupling between the electrode assembly 100 and the guard structure 200. Because the electrode tabs 110 formed at two sides of the electrode assembly 100 are inserted into in the direction in which the slit grooves 211 are recessed, the electrode assembly 100 may be coupled to the guard structure 200 at a time.

The slit groove 211 may include a shape in which the width becomes smaller and smaller along the direction (x) in which the slit groove 211 is recessed, and as the electrode tab 110 is inserted along the direction (x) in which the slit groove 211 is recessed, the fixing strength of fixing the electrode tab 110 may be further enhanced.

The metal portion 212 may be disposed along the direction (x) in which the slit groove 211 is recessed from one side of the fixing portion 210, and be located at one or two sides of the slit groove 211. The metal portion 212 may contact the electrode tab 110 inserted into the slit groove 211.

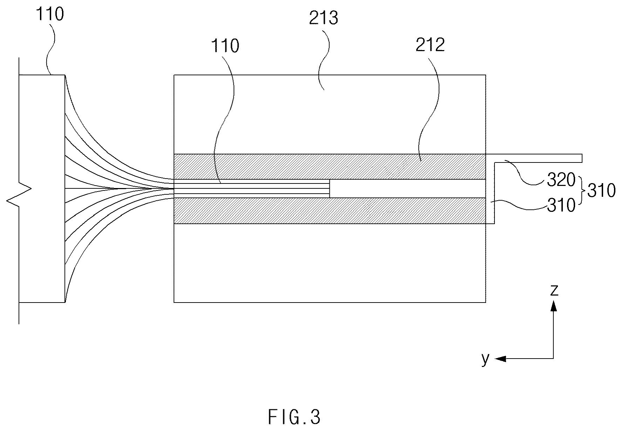

Describing with reference to FIG. 3, the metal portion 212 may come into direct contact with the electrode tab 110 inserted into the slit groove 211, and may be electrically connected to the electrode tab 110 that contacts the metal portion 212. The metal portion 212 electrically connected to the electrode tab 110 may electrically connect an electrode lead 300 joined to the metal portion 212 to the electrode tab 110.

The metal portion 212 may include a pair of metal portions at two opposite sides of the slit groove 211. The pair of metal portions 212 may be arranged in parallel, facing each other.

The metal portion 212 may be formed from an electrically conductive metal, and may include, for example, at least one material of gold, silver, copper or aluminum, but is not limited thereto.

The metal portion 212 may be extended from the outer end to the inner end of the slit groove along the length direction (x).

The metal portion 212 may be formed with a predetermined width along the length direction (y axis) of the electrode assembly 100. The width of the metal portion 212 may be greater than the length of the electrode tab 110 in the length direction (y axis) to prevent the electrode tab 110 from protruding outward from the metal portion 212 when the electrode tab 110 is inserted into the slit groove 211 between the pair of metal portions 212 and comes into contact with the metal portions 212.

The outer side surface through which the thickness of the metal portion 212 is exposed may be exposed from the elastic portion 213 along the periphery of the metal portion 212, and the metal portion 212 may include a joining portion 212b to which the electrode lead 300 is joined on the outer side surface thereof. The metal portion 212 may be formed in the shape of a metal block having a predetermined thickness to form an area at which the metal lead may be joined to the joining portion 212b.

The pair of opposite metal portions 212 may be arranged spaced a predetermined distance apart from each other in a direction facing away from each other so that the electrode tab 110 may be disposed between them, and the slit groove 211 may be formed in the space between the pair of opposite metal portions 212 spaced apart from each other.

Describing with reference to FIG 2(B), the pair of opposite metal portions 212 may include a guide portion 212a at one side. The guide portion 212a may be an inclined surface formed at one side of the pair of opposite metal portions 212 such that the pair of opposite metal portions 212 get closer to each other along the direction (x axis) in which the slit groove 211 is recessed. The guide portion 212a may guide the insertion of the electrode tab 110 into the slit groove 211.

The elastic portion 213 may surround the outer surface of the pair of opposite metal portions 212, and may apply an elastic force to the metal portion 212 so that the electrode tab 110 located between the pair of metal portions 212 may contact the metal portion 212.

The elastic portion 213 surrounding the outer surface of the pair of opposite metal portions 212 may connect the other sides of the pair of opposite metal portions 212.

The elastic portion 213 may include an electrically insulating material, and may be formed from, for example, plastic or rubber.

The elastic portion 213 may include an elastic transmission portion 213a and an elastic deformation portion 213b.

The elastic transmission portion 213a may be configured to transmit the elastic force of the elastic deformation portion 213b to the metal portion 212, and may include a pair of opposite elastic transmission portions. The pair of metal portions 212 may be located between the pair of elastic transmission portions 213a. The pair of metal portions 212 subjected to the elastic force through the pair of elastic transmission portions 213a may apply the force in a direction in which they get closer to each other, and the electrode tab 110 located between the pair of metal portions 212 may be fixed by the force applied by the pair of metal portions 212.

The elastic transmission portion 213a may be coupled to the metal portion 212 such that it surrounds the outer surface opposite to the surface of the metal portion 212 which contacts with the electrode tab 110. That is, the elastic transmission portion 213a may surround the metal portion 212 such that the outer side surface is exposed, through which the thickness of the metal portion 212 is exposed.

Each metal portion 212 may be coupled to each of the facing inner surfaces of the pair of opposite elastic transmission portions 213a.

The elastic transmission portion 213a may be coupled to the metal portion 212 from one side to the other side of the metal portion 212 along the length direction (x axis) of the metal portion 212. Here, one side of the metal portion 212 may refer to an area of the fixing portion 210 where the slit groove 211 starts to be recessed.

The width of the elastic transmission portion 213a may be equal or similar to the width of the metal portion 212.

The elastic deformation portion 213b may be formed at the other side of the pair of opposite elastic transmission portions 213a, and may connect the other sides of the pair of elastic transmission portions 213a and connect the other sides of the pair of metal portions 212.

The elastic transmission portion 213a may be extended from one side surface of the elastic deformation portion 213b along the length direction (x) of the slit groove 211.

When the ends at one side of the pair of elastic transmission portions 213a spread apart to place the electrode tab 110 in the slit groove 211, the elastic deformation portion 213b located at the other side of the elastic transmission portion 213a may deform so that one side surface adjacent to the metal portion 212 may be pulled by the tensile force, and the other side surface may be compressed by the compressive force. As the elastic deformation portion 213b deforms, the elastic force may be transmitted from the elastic deformation portion 213b to the elastic transmission portion 213a. The elastic deformation portion 213b may change in shape within the elastic deformation range.

The support portion 220, 240, 250 may be disposed between the pair of fixing portions 210 spaced apart from each other, and may support the pair of fixing portions 210. During the transport of the secondary battery 1, impacts may be applied in a direction compressing the secondary battery 1 along the length direction (y axis) of the secondary battery 1, and due to the impacts, damage such as breakage may occur to the electrode tab 110 located at one end portion of the secondary battery 1 in the length direction. The electrode tab 110 may be formed at the current collector formed from an about 10 µm thick metal foil, and when deformation such as breakage occurs, it may be easily damaged, so the support portion 220, 240, 250 may support the pair of fixing portions 210 to fix the electrode tab 110 to prevent the transfer of the impact to the electrode tab 110.

The support portion 220, 240, 250 may be coupled to the fixing portion 210 at a location at which one end portion and the other end portion are skewed to the other sideon one surface of the fixing portion 210.

The support portion 220, 240, 250 may be coupled to the fixing portion 210 through a coupling unit 230.

The coupling unit 230 may include, for example, a screw, a rivet, but is not limited thereto.

The coupling unit 230 may couple the support portion 220, 240, 250 located between the pair of fixing portions 210 to any one of the pair of fixing portions 210. The coupling unit 230 may penetrate any one of the pair of fixing portions 210 and be coupled to the fixing portion 210 and the support portion 220, 240, 250.

Because the support portion 220, 240, 250 and the fixing portion 210 are coupled through the coupling unit 230, when the coupling unit 230 is removed from the electrode assembly protection combination structure 10, the support portion 220, 240, 250 may be separated from the fixing portion 210. The coupling unit 230 may couple the support portion 220, 240, 250 and the fixing portion 210 that fit the size according to the size of the electrode assembly 100.

Describing with reference to FIG. 1, as the first embodiment of the support portion 220, the support portion 220 may be disposed at the other side of the fixing portion 210. Here, the other side may be an area of the fixing portion 210 in which the elastic deformation portion 213b is located. Because the fixing portion 210 has the slit groove recessed from one side of the fixing portion 210, the support portion 220 may be disposed at the other side of the fixing portion 210 to form a space in which the electrode assembly 100 coupled to the fixing portion 210 will be disposed between the pair of fixing portions 210. More specifically, the support portion 220 may be disposed between the pair of elastic deformation portions 213b. One end portion of the support portion 220 may be coupled to any one of the pair of elastic deformation portions 213b through the coupling unit 230, and the other end portion of the support portion 220 may be coupled to the other one of the pair of elastic deformation portions 213b through the coupling unit 230.

The support portion 220 may be formed with a predetermined thickness and width to prevent deformation caused by the pressure applied along the length direction (y axis) of the electrode assembly 100, and may prevent the transfer of the external force applied to the fixing portion 210 to the electrode assembly 100 and the electrode tab 110.

The support portion 220 may be disposed such that one side surface faces the direction (x axis) in which the slit groove 211 is recessed, and the other side surface form the same plane with the other side surface of the elastic deformation portion 213b. Because the support portion 220 and the elastic deformation portion 213b form the same plane, the side of the secondary battery 1 may be smoothly formed, and when a plurality of secondary batteries 1 are stacked, a natural arrangement may be formed.

Because the guard structure 200 including the pair of fixing portions 210 and the support portion 220 is disposed around the electrode assembly 100 along the width direction (x axis) and the length direction (y axis), it may prevent the transfer of the external force applied along the length direction (y axis) of the electrode assembly 100 to the electrode assembly 100 and the electrode tab 110, and resist the external force, thereby protecting the current collector and the electrode tab 110 of the electrode assembly 100 from the external force.

The support portion 220 may be formed in the shape of a prism having a predetermined cross-sectional shape to resist the force that compresses the support portion 220. The support portion 220 may be, for example, a square or rectangular prism, a cylinder, but is not limited thereto.

The support portion 220 may be a linear member having a predetermined cross-sectional shape.

The support portion 220 may be formed from an electrically insulating material to prevent electrical connection between the pair of fixing portions 210, and may be made of, for example, plastic or rubber.

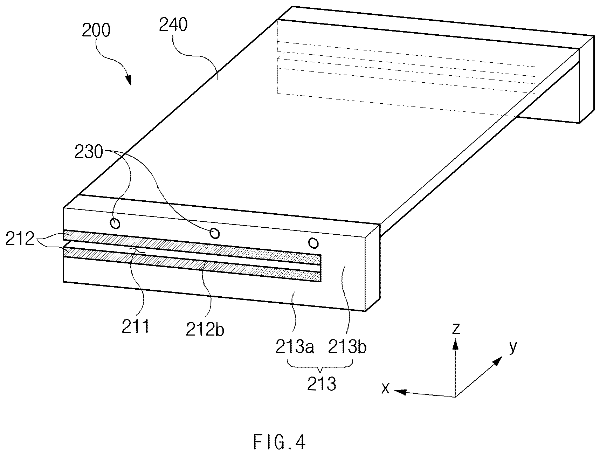

Describing with reference to FIG. 4, as a second embodiment of the support portion 240, the support portion 240 may be disposed between the pair of fixing portions 210, and may be disposed above or below the slit groove 211 along the direction (x axis) in which the slit groove 211 is recessed from one side of the fixing portion 210. More specifically, the support portion 240 may be disposed between the pair of elastic transmission portions 213a. One end portion may be coupled to any one of the pair of elastic transmission portions 213a through the coupling unit 230, and the other end portion may be coupled to the other one of the pair of elastic transmission portions 213a through the coupling unit 230.

The support portion 240 may be formed with a predetermined thickness and width to prevent deformation caused by the external force applied along the length direction of the electrode assembly 100, and may prevent the transfer of the external force applied to the fixing portion 210 to the electrode assembly 100 and the electrode tab 110.

The support portion 240 may be disposed facing one surface of the electrode assembly 100.

Because the guard structure 200 including the pair of fixing portions 210 and the support portion 240 is disposed around the electrode assembly 100 along the width direction (x axis) and the length direction (y axis), it may prevent the transfer of the external force applied along the length direction of the electrode assembly 100 to the electrode assembly 100 and the electrode tab 110, resist the external force, and protect the current collector and the electrode tab 110 of the electrode assembly 100 from the external force.

One end portion of the support portion 240 may be on the same plane as one end portion of the elastic transmission portion 213a, and the other end portion of the support portion 240 may be on the same plane as the other end portion of the elastic deformation portion 213b.

The support portion 240 may be formed from an electrically insulating material to prevent electrical connection between the pair of fixing portions 210, and may be made of, for example, plastic or rubber.

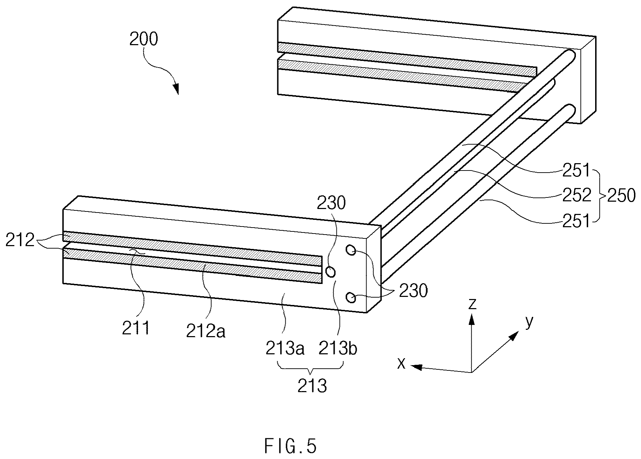

Describing with reference to FIG. 5, as a third embodiment of the support portion 250, the support portion 250 may include a plurality of support portions 250 disposed between the pair of fixing portions 210, and may be disposed at the other side of the fixing portions 210. Here, one side of the fixing portion 210 may refer to an area of the fixing portion 210 where the slit groove 211 starts to be recessed and its surrounding area, and the other side of the fixing portion 210 may refer to an area of the fixing portion 210 at which the elastic deformation portion 213b is located.

Because the plurality of support portions 250 is placed, each support portion 250 may dissipate and resist the external force applied in the length direction (y axis) of the electrode assembly 100.

The plurality of support portions 250 may be arranged in parallel and spaced apart from each other diagonally in a zigzag from top to bottom at the other side of the fixing portion 210. Due to the zigzag arrangement, in addition to the external force applied along the length direction (y axis) of the electrode assembly 100, the plurality of support portions 250 may complementarily resist a bending force applied to the plurality of support portions 250 when the electrode assembly 100 warps in the event of swelling or bending in the electrode assembly 100. Due to the difference in position between the plurality of support portions 250, when tensile force is applied to any one support portion 250 by the bending force, compressive force is applied to the other support portion 250, thus it may be possible to prevent the support portion 250 subjected to the tensile force from becoming deformed by the bending force.

The support portion 250 may include an outer support portion 251 and an inner support portion 252. When the plurality of support portions 250 is arranged in a zigzag, the outer support portion 251 may be the component located at the relatively outer side of the fixing portion 210, and the inner support portion 252 may be the component located at the relatively inner side of the fixing portion 21. Each of the outer support portion 251 and the inner support portion 252 may dissipate and resist the external force applied in the length direction (y axis) of the electrode assembly 100, and complementarily resist the bending force.

The support portion 250 may be formed in the shape of a prism whose length is extended along the length direction (y) of the electrode assembly 100 to connect the plurality of fixing portions 210 spaced apart from each other.

The cross-sectional shape of the support portion 250 may include, for example, a circular shape, a square or rectangular shape, an oval or elliptical shape, a polygonal shape, but is not limited thereto.

The electrode lead 300 may be joined to the joining portion 212b of the metal portion 212, and electrically connected to the electrode tab 110 through the metal portion 212.

The electrode lead 300 may include a plurality of electrode leads, and each electrode lead 300 may be joined to the pair of metal portions 212 respectively included in the pair of fixing portions 210 by welding or soldering.

The electrode lead 300 may include a first part 310 and a second part 320.

The first part 310 may be joined to the joining portion 212b formed at the outer side surface of the metal portion 212, and because the first part 310 is joined to each of the pair of opposite metal portions 212, the first part 310 may connect the pair of metal portions 212. As the first part 310 is joined to the pair of opposite metal portions 212, the gap between the pair of metal portions 212 may be fixed, and the electrode tab 110 located between the pair of metal portions 212 may be secured more strongly.

The first part 310 may be joined to a predetermined location on the outer side surface through which the thickness of the metal portion 212 is exposed.

The second part 320 may be bent from the first part 310 in the outward direction and extended outward. More specifically, the second part 320 may be bent in a direction perpendicular to the first part 310 and protruded outward.

The electrode lead 300 may be formed by joining the first part 310 and the second part 320 or bending a single member.

The second part 320 may be protruded outward from a battery case 20 when the electrode assembly protection combination structure 10 is received in the battery case 20.

### Second Embodiment

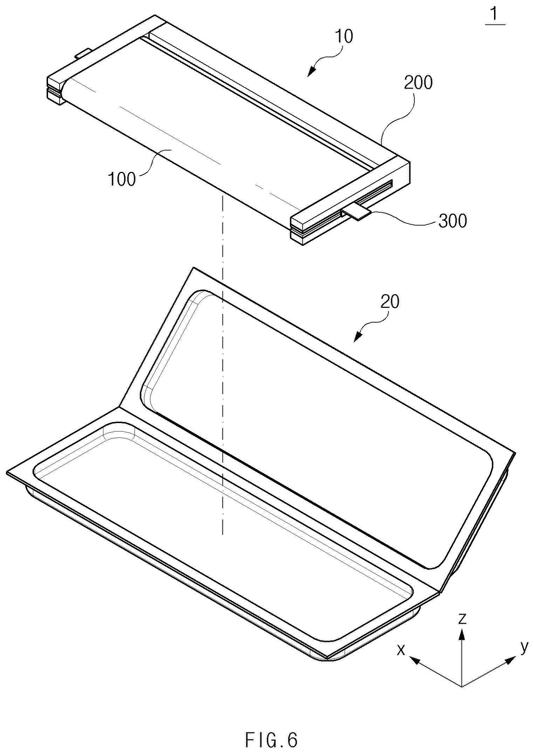

Describing with reference to FIG. 6, as a second embodiment of the present disclosure, the secondary battery 1 may include the electrode assembly protection combination structure 10 and the battery case 20.

For the detailed description of the electrode assembly protection combination structure 10, reference may be made to the foregoing description.

The battery case 20 may be manufactured by forming a pouch film, and the pouch film may be manufactured by laminating a first insulation layer, a metal layer and a second insulation layer in a sequential order.

The battery case 20 may include an accommodation portion recessed to receive the electrode assembly protection combination structure 10 and a sealing portion to seal the battery case 20 by heat welding along the edge of the accommodation portion.

The secondary battery 1 may be manufactured by receiving the electrode assembly protection combination structure 10 in the accommodation portion of the battery case 20, and then sealing the sealing portion.

### Third Embodiment

As a third embodiment of the present disclosure, the guard structure 200 may include the pair of fixing portions 210 including the slit groove 211 and the metal portion 212 located at one or two sides of the slit groove 211 and the support portion 220 disposed between the pair of fixing portions 210 and configured to support the pair of fixing portions 210. For the detailed description of the fixing portion 210 and the support portion 220, reference may be made to the description of the first embodiment of the present disclosure.

While the present disclosure has been hereinabove described with regard to a limited number of embodiments and drawings, the present disclosure is not limited thereto and may be embodied in different forms by persons having ordinary skill in the technical field pertaining to the present disclosure within the technical aspect of the present disclosure and the scope of the appended claims and their equivalents.

### [LIST OF REFERENCE NUMERALS]

| | | | |
|---|---|---|---|
| 1: | Secondary battery | 10: | Electrode assembly protection combination structure |
| 20: | Battery case | 100: | Electrode assembly |
| 210: | Electrode tab | 200: | Guard structure |
| 210: | Fixing portion | 211: | Slit groove |
| 212: | Metal portion | 212a: | Guide portion |
| 212b: | Elastic transmission portion | 213: | Elastic portion |
| 213a: | Joining portion | 213b | Elastic deformation portion |
| 220, 240, 250: | Support portion | 251: | Outer support portion |
| 252: | Inner support portion | 230: | Coupling unit |
| 300: | Electrode lead | 310: | First part |
| 320: | Second part | | |

## Claims

1. An electrode assembly protection combination structure comprising:
an electrode assembly including a pair of electrode tabs; and
a guard structure coupled to the electrode assembly, and configured to protect the electrode assembly from an impact,
wherein the guard structure includes:
a pair of fixing portions configured to fix the pair of electrode tabs, respectively; and
a support portion configured to support the pair of fixing portions.

2. The electrode assembly protection combination structure according to claim 1, wherein the fixing portion includes:
a slit groove recessed from one side of the fixing portion to allow the electrode tab to be inserted into the slit groove.

3. The electrode assembly protection combination structure according to claim 2, wherein the fixing portion includes:
a metal portion that is formed at one or both sides of the slit groove along a direction in which the slit groove is recessed, and comes into contact with the electrode tab.

4. The electrode assembly protection combination structure according to claim 3, wherein the fixing portion further includes:
an elastic portion that surrounds an outer surface of the metal portion, and brings the electrode tab into contact with the metal portion.

5. The electrode assembly protection combination structure according to claim 4, wherein the elastic portion includes:
an elastic transmission portion that is formed along a length direction of the slit groove and surrounds a surface and an opposite surface of the metal portion; and
an elastic deformation portion that connects the elastic transmission portions, and elastically deforms as the elastic transmission portions spread apart.

6. The electrode assembly protection combination structure according to claim 4, wherein the elastic portion includes an electrically insulating material.

7. The electrode assembly protection combination structure according to claim 4, wherein the metal portion includes a joining portion at an outer side surface, the joining portion being exposed from the elastic portion, and to which an electrode lead is joined.

8. The electrode assembly protection combination structure according to claim 7, wherein the electrode lead includes:
a first part joined to the joining portion; and
a second part protruded from the first part in an outward direction.

9. The electrode assembly protection combination structure according to claim 2, wherein the support portion is disposed between the pair of fixing portions, and
wherein an end portion and an opposite end portion of the support portion are coupled to the fixing portion at a position biased on a surface of the fixing portion.

10. The electrode assembly protection combination structure according to claim 9, wherein the support portion is disposed at the other side of the fixing portion.

11. The electrode assembly protection combination structure according to claim 10, wherein the support portion includes a plurality of support portions, and
wherein the plurality of support portions are spaced apart from each other in a diagonal direction and arranged in parallel.

12. The electrode assembly protection combination structure according to claim 9, wherein the support portion is disposed above or below the slit groove along a direction in which the slit groove is recessed.

13. The electrode assembly protection combination structure according to claim 9, wherein the support portion includes an electrically insulating material.

14. The electrode assembly protection combination structure according to claim 9, wherein the support portion is a linear member having a predetermined cross-sectional shape.

15. A secondary battery comprising:
an electrode assembly protection combination structure; and
a battery case accommodating the electrode assembly protection combination structure,
wherein the electrode assembly protection combination structure includes:
an electrode assembly including a pair of electrode tabs; and
a guard structure coupled to the electrode assembly, and configured to protect the electrode assembly from an impact, and
wherein the guard structure includes:
a pair of fixing portions configured to fix the pair of electrode tabs, respectively; and
a support portion configured to support the pair of fixing portions.

16. A guard structure comprising:
a fixing portion including a slit groove and a metal portion located at one or both sides of the slit groove, and including a pair of fixing portions; and
a support portion disposed between the pair of fixing portions, and configured to support the pair of fixing portions.
